# EUROPEAN PATENT SPECIFICATION

(11) **EP 3 382 243 B1**
(45) Date of publication and mention of the grant of the patent: **03.03.2021**
(21) Application number: 17163645.9
(22) Date of filing: 29.03.2017
(51) Int. Cl.: F16K 11/10, F24H 9/12, F24D 3/10, F16K 27/00, F24D 19/08

(54) **SAFETY VALVE UNIT, IN PARTICULAR FOR PROTECTING A STORAGE WATER HEATER**
SICHERHEITSVENTILEINHEIT, INSBESONDERE ZUM SCHUTZ EINES HEISSWASSERSPEICHERS
UNITÉ DE SOUPAPE DE SÉCURITÉ, EN PARTICULIER POUR PROTÉGER UN CHAUFFE-EAU À ACCUMULATION

(43) Date of publication of application: 03.10.2018
(73) Proprietor: Caleffi S.p.A., 28010 Fontaneto d'Agogna, Novara (IT)
(72) Inventor: CALEFFI, Marco, 28010 Fontaneto d'Agogna Novara (IT)
(74) Representative: Siniscalco, Fabio

(56) References cited:
- WO-A2-2006/079002
- CH-A- 471 998
- DE-A1-102006 040 872
- DE-U1-202005 010 998
- DE-U1-202013 101 919

## Description

### BACKGROUND OF THE INVENTION

The present invention relates to a safety valve unit, which is intended particularly, but not exclusively, to be used in hydro sanitary installations for protecting a storage water heater.

### PRIOR ART

Safety valve units are known that are fitted in hydro sanitary installations to protect a storage water heater.

The safety valve unit for protecting a storage water heater is made up of different components, namely a shut-off tap, a check valve and a safety valve.

Owing to these components, this safety valve unit performs different functions, namely:
- an intercepting function to insulate the supply network and enable the water-heating circuit to be maintained and checked;
- anti-pollution function to prevent the backflow of the hot water to the supply network supplying the cold water;
- safety function to prevent the pressure of the fluid contained in the water heaters reaching dangerous levels.

Several versions of the safety valve unit are necessarily made in order to be able to apply the versions to different types of connection of the storage water heater, and in particular, commonly, a version is made for a horizontal connection and a version is made for a vertical connection.

This creates problems during the manufacturing and assembly step as different components and assembly are necessary.

This also creates problems during the supplying, storage and sales steps because of the dissimilarity of the products.

Another problem arises in the event of malfunctions of the safety valve; in fact, this entails the replacement of the entire valve unit, it not being possible to replace only the safety valve, which significantly affects the cost of the operation.

DE102006040872A1 and DE202005010998U1 relate to safety valves provided with a shut-off tap for adjusting fluid flow between an inlet and an outlet of the valve unit, a check valve to prevent fluid backflow from the outlet to the inlet, and a safety valve to discharge fluid in the event of overpressure.

CH471998A shows an hydraulic fitting for pipe heating systems which has a cross shape.

### OBJECT OF THE INVENTION

The object of the present invention is to solve the aforementioned problems.

### SHORT DESCRIPTION OF THE INVENTION

This object is achieved by a safety valve unit according to claim 1.

### SHORT DESCRIPTION OF THE DRAWINGS

In order to better understand the invention, a description is given below of a nonlimiting exemplary embodiment thereof, illustrated in the attached drawings, in which:
fig. 1 is a front perspective view of a safety valve unit according to the invention in a first configuration;
fig.2 is a front view of the valve unit of fig.1;
fig.3 is a rear view of the valve unit of fig.1;
fig.4 is a front perspective view of the valve unit of fig.1 in a second configuration;
fig.5 is a front view of the valve unit of fig.4;
fig.6 is a rear view of the valve unit of fig.4;
fig.7 is a section of the valve unit of fig.1;
fig.8 is a section of the valve unit of fig.4;
fig.9 is an exploded perspective view, rotated by 90°, of the valve unit of fig.4;
fig. 10 shows in an exploded front view the different ways of assembling the valve unit.

### DETAILED DESCRIPTION OF THE INVENTION

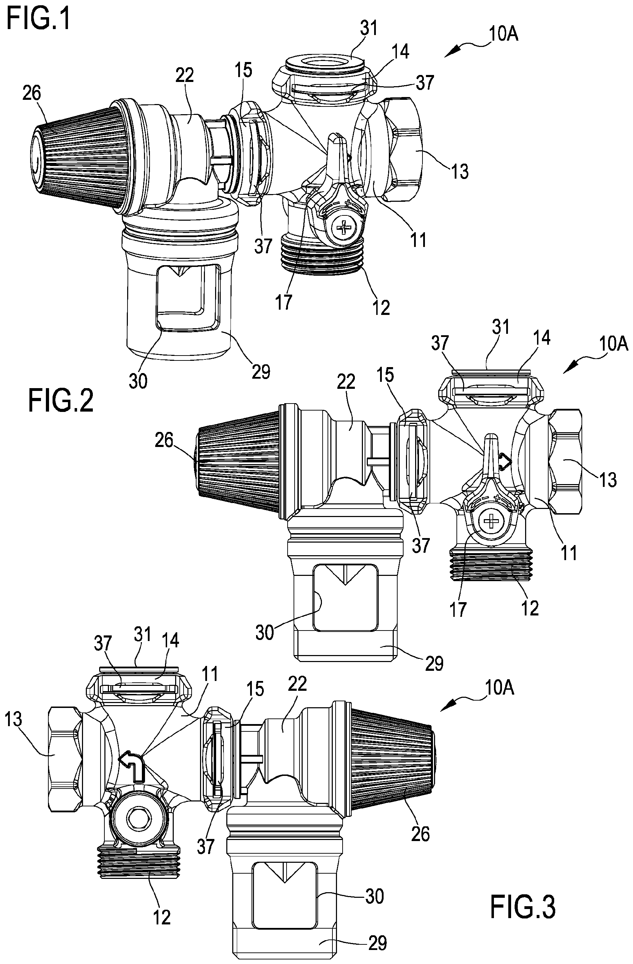

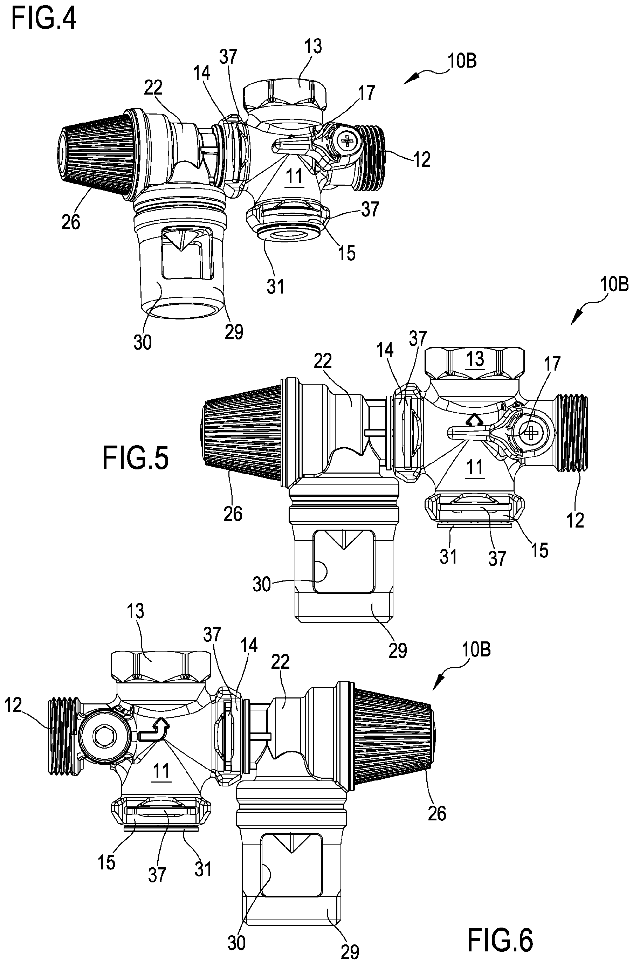

The safety valve unit illustrated is intended to protect storage water heaters and is indicated by 10A in the configuration in fig.1 and by 10B in the configuration in fig.4.

This valve unit provides different components that are connected together.

A first component is a hollow cross connector 11 made of brass or of a technopolymer. The arms of the cross are perpendicular to one another.

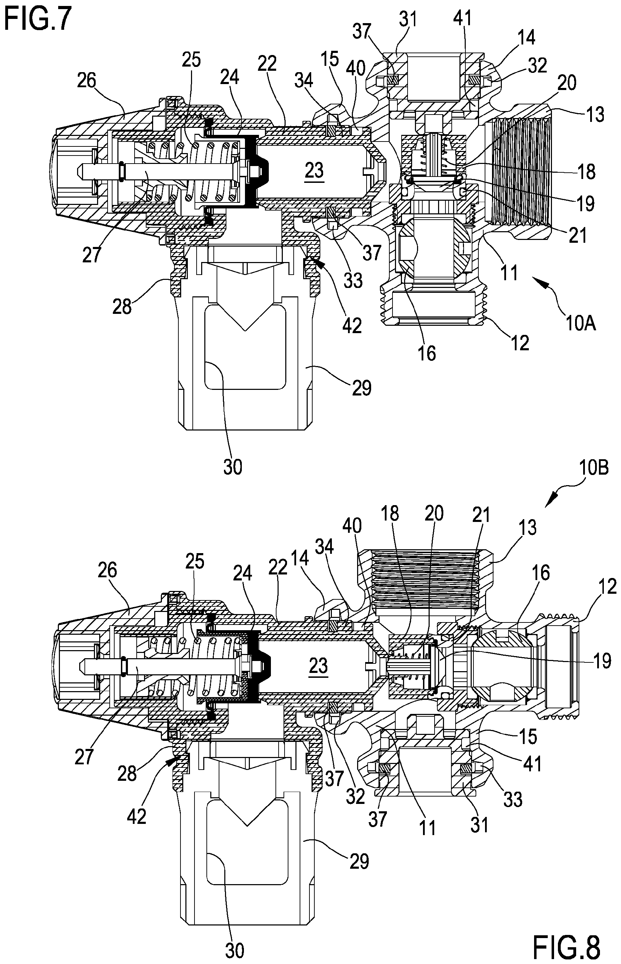

With reference to figs 7,8, the connector 11 has a first inlet connection 12 threaded externally, suitable for being connected to an inlet conduit of cold water, a second outlet connection 13 threaded internally, suitable for being connected to an inlet conduit of the water heater, a third connection 14 and a fourth connection 15, which are identical to one another, suitable for being connected to other components of the valve unit. In the connector 11, downstream of the connection 12, a ball shutter 16 is located, which is controllable by an external lever 17 that is visible in figs 1,2,4,5,9,10. Downstream of the ball shutter 16, in the connector 11 a check valve 18 is also located having a shutter 19 pushed to closing position in the direction of the ball shutter 16 by a spring 20 on a seat 21 along an internal fluid path from the connection 12 to the connection 13.

A second component is a safety valve 22 with a body made of a technopolymer.

Still with reference to figs 7,8, the valve 22 has internally a rectilinear conduit 23 communicating at one end with the inside of the connector 11; at the other end the conduit 23 is closed by a shutter 24 upon the thrust of a calibrated spring 25. The shutter 24 is also connected to an outer knob 26 through a rod 27; the knob 26 is connected to the body of the valve 22 by cam profile couplings, such that manual rotation of the knob causes, through the rod 27, removal of the shutter 24 from the end of the conduit 23. The valve 22 also has an outlet connection 28, which is perpendicular to the conduit 23 and the inside of which is in communication with the conduit 23 when the shutter 24 is in a position that is removed from the end of the conduit.

A third component is a discharge pipe 29 with windows 30, made of technopolymer.

A fourth component is a closing plug 31 made of technopolymer.

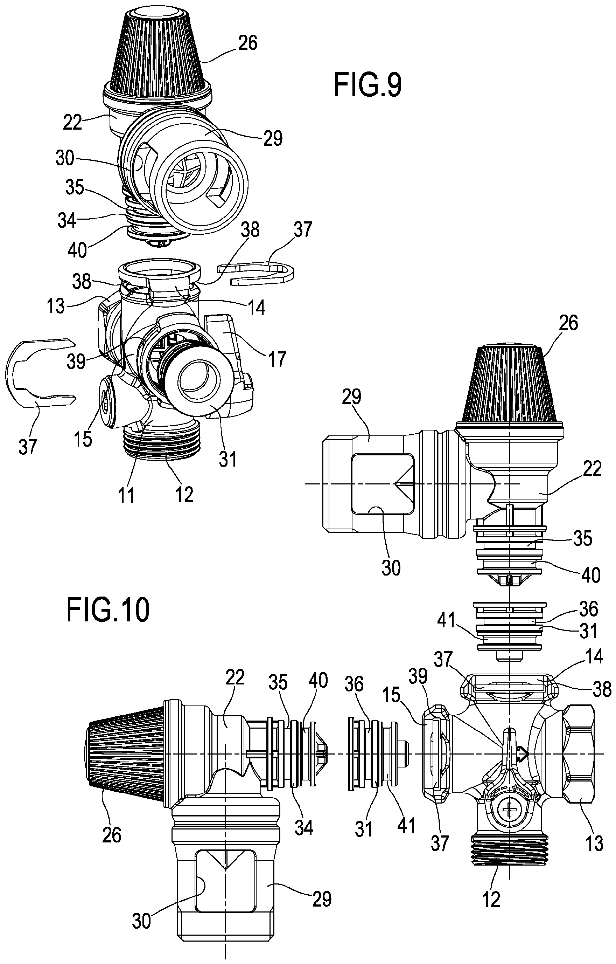

The safety valve 22 and the plug 31 can be connected both to the connection 14 and to the connection 15 of the connector 11, as shown in the exploded view of fig. 10. When the plug 31 is connected to the connection 14 the valve 22 is connected to the connection 15 and vice versa.

For the aforesaid connections, the following is provided.

With reference to figs 7,8, the connection 14 has a perimetric internal groove 32 and the connection 15 has an equal perimetric internal groove 33. Correspondingly, as well shown in fig. 10, the body of the valve 22 has on one portion of connection 34 a perimetric external groove 35 and the plug 31 has an equal perimetric external groove 36. With reference to fig.9, two identical forks 37 are further provided, each of which is suitable for being inserted into one of a pair of opposite openings of one of the connections 14,15; the openings of the connection 14 are indicated by 38 whereas the openings of the connection 15 are indicated by 39.

In fig.7, the plug 31 is fixed to the connection 14 and the valve 22 is fixed to the connection 15. With reference to figs 7,9,10, to fix the plug 31 to the connection 14 the plug 31 is inserted into the connection 14 so as to align the grooves 32 and 36 respectively of the connection 14 and of the plug 31, and thus a fork 37 is inserted into an opening 38 of the connection 14, and equally for fixing the valve 22 to the connection 15 the portion 34 of the valve 22 is inserted into the connection 15 so as to align the grooves 33 and 35 respectively of the connection 15 and of the body of the valve 22, and then the other fork 37 is inserted into an opening 39 of the connection 15.

In fig.8, on the other hand, the valve 22 is fixed to the connection 14 and the plug 31 is fixed to the connection 15: for fixing, the procedure seen above is followed.

The conduit 23 of the valve 22 is always aligned with the connection 14 or 15 to which the valve 22 is connected.

The connection portion 34 of the valve 22 and the plug 31 are provided with two respective annular grooves 40 and 41 that are suitable for housing sealing gaskets that are not illustrated to ensure the coupling seal between the aforesaid components.

The discharge pipe 29 is on the other hand connected to the connection 28 of the valve 22 by a snap connection 42 that enables the pipe 29 to be oriented around a rotation axis thereof.

The operation of the disclosed and illustrated valve unit is as follows.

The connection 12 of the valve unit is connected to an inlet conduit of cold water from the water network and the connection 13 is connected to an inlet conduit of the water heater. The cold water flows into the valve unit inside the shutter 16 and the check valve 18 and then moves to the water heater.

The shutter 16 performs the function of intercepting the water and by acting on the external lever 17 it is possible to move the shutter 16 between a closing position and a maximum opening position. By moving the shutter 16 to a closing position the supply network is cut off for maintenance and control of the water heater circuit.

The valve 18 permits a flow of water from the water network to the water heater, preventing the backflow of hot water to the water network supplying cold water owing to the automatic closing of the shutter 19 in the opposite flow, thus performing an anti-pollution function.

The safety valve 22 comes into operation when the pressure of the water in the valve unit exceeds a set limit: in this situation the shutter 24 moves away from the end of the conduit 23 and the water flows outside the valve unit through the discharge pipe 29. In this manner it is avoided that the pressure of the fluid contained in the water heater reaches dangerous levels. The windows 30 of the pipe 29 constitute backflow preventer air intakes.

By rotating the knob 26 of the safety valve 22, it is possible to remove the shutter 24 from the end of the conduit 23 and thus discharge the water manually to the outside of the valve unit through the pipe 29.

As has been seen previously, by inverting the position of the safety valve 22 and of the plug 31, two different configurations, 10A and 10B, of the valve unit are obtained. In the configuration 10A (figs 1,2,3,7), the connection 13 connecting to the water heater is arranged horizontally, whereas in the configuration 10B (figs. 4,5,6,8) the connection 13 connecting to the water heater is arranged vertically. This is very advantageous because with the same components two valve unit configurations are obtained, simplifying the manufacturing, supplying, storage and sale of the product.

In both configurations 10A and 10B of the valve unit, the discharge pipe 29 remains vertical for the discharge by gravity of the water.

In the event of a malfunction of the safety valve 22, it is possible to replace only the valve 22, by releasing the valve 22 from the connection 14 or 15 by removing the fork 37 and fitting a new safety valve to the valve unit. It is not thus necessary to replace the entire valve unit, with low intervention cost.

Making the body of the safety valve with a technopolymer makes the valve unit cheaper and lighter.

Variants on and/or additions to what has been disclosed and illustrated can be provided.

The shape of each component and of each element can vary according to needs.

The safety valve unit, although it is particularly suitable for protecting storage water heaters, can also be used in other hydraulic sectors.

## Claims

1. Safety valve unit, in particular for protecting a storage water heater, comprising a shut-off tap (16,17) for adjusting fluid flow between an inlet and an outlet of the valve unit, a check valve (18) to prevent fluid backflow from the outlet to the inlet, a safety valve (22) to discharge fluid in the event of overpressure, and a discharge pipe (29) connected to the safety valve (22), comprising a cross connector (11) that incorporates the shut-off tap (16,17) and the check valve (18), in which the connector (11) has a first inlet connection (12) and a second outlet connection (13) for connecting respectively to a fluid inlet conduit and to a fluid outlet conduit, and has further a third (14) and a fourth (15) connection, to one of which (14;15) the safety valve (22) is connected and the other of which (14;15) is closed by a plug (31), fixing elements (32-39) being provided for removably fixing the safety valve (22) and the plug (31), **characterised in that** the fixing elements comprise perimetric equal internal grooves (32,33) obtained in the third (14) and in the fourth (15) connection, corresponding perimetric equal external grooves (35,36) obtained in the body of the safety valve (22) and in the plug (31), and locking elements (37), the perimetric equal internal grooves (32,33) being aligned with the perimetric equal external grooves (35,36) and the locking elements (37) being insertable in an extractable manner between the internal grooves (32,33) and the external grooves (35,36) to secure the safety valve (22) and the plug (31) to the third (14) and fourth (15) connection, wherein the locking elements are made up of two identical forks (37), each of which is inserted into a pair of opposite openings (38;39) of one or other of said third (14) and fourth (15) connection, to allow the position of the safety valve (22) and the plug (31) to be inverted.

2. Valve unit according to claim 1, wherein the arms of the cross connector (11) are perpendicular to one another.

3. Valve unit according to claim 1 or 2, wherein the shut-off tap comprises a ball shutter (16) arranged near the first connection (12) of the connector (11) and the check valve (18) is arranged downstream of the ball shutter (16) along an internal fluid path from the first (12) to the second (13) connection.

4. Valve unit according to any preceding claim, wherein the safety valve (22) has internally a rectilinear conduit (23) aligned with the connection (14,15) to which the safety valve (22) is connected and closed by a shutter (24) upon the thrust of a calibrated spring (25), and wherein the safety valve (22) further has an outlet connection (28), to which the pipe (29) is connected and which is perpendicular to the rectilinear conduit (23) and in communication with the rectilinear conduit (23) when the shutter (24) is in an opening position of the rectilinear conduit (23).

5. Valve unit according to claim 4, wherein the pipe (29) is removably connected to the outlet connection (28) of the safety valve (22).

6. Valve unit according to claim 5, wherein the pipe (29) is connected to the outlet connection (28) of the safety valve (22) by a snap connection (42).

7. Valve unit according to claim 5 or 6, wherein the pipe (29) is orientable.

8. Valve unit according to claim 4, wherein the shutter (24) of the safety valve (22) is connected to an outer knob (26) through a rod (27), such that manual rotation of the knob (26) causes an opening movement of the shutter (24) of the rectilinear conduit (23).

9. Valve unit according to any preceding claim, wherein the cross connector (11) is made of brass, and the body of the safety valve (22), the discharge pipe (29) and the plug (31) are made of a technopolymer.

10. Valve unit according to any one of claims 1 to 8, wherein the cross connector (11), the body of the safety valve (22), the discharge pipe (29), and the plug (31) are made of a technopolymer.

## Patentansprüche

1. Sicherheitsventileinheit, insbesondere zum Schutz eines Heißwasserspeichers, umfassend einen Absperrhahn (16,17) zum Einstellen von Flüssigkeitsstrom zwischen einem Einlass und einem Auslass der Ventileinheit, ein Rückschlagventil (18) zum Verhindern eines Flüssigkeitsrückstroms von dem Auslass zu dem Einlass, ein Sicherheitsventil (22) zum Abgeben von Flüssigkeit im Fall von Überdruck und ein Abgaberohr (29), das mit dem Sicherheitsventil (22) verbunden ist, umfassend einen Kreuzverbinder (11), der den Absperrhahn (16,17) und das Rückschlagventil (18) beinhaltet, in dem der Verbinder (11) eine erste Einlassverbindung (12) und eine zweite Auslassverbindung (13) zur Verbindung mit einer Flüssigkeitseinlassleitung bzw. einer Flüssigkeitsauslassleitung aufweist, und weiter eine dritte (14) und eine vierte (15) Verbindung aufweist, wobei das Sicherheitsventil (22) mit einer davon (14;15) verbunden ist, während die andere davon (14;15) durch einen Stöpsel (31) verschlossen ist, wobei Befestigungselemente (32-39) zum lösbaren Befestigen des Sicherheitsventils (22) und des Stöpsels (31) bereitgestellt sind, **dadurch gekennzeichnet, dass** die Befestigungselemente um den Umfang gleiche Innenrillen (32,33) umfassen, die in der dritten (14) und in der vierten (15) Verbindung erhalten werden, entsprechend um den Umfang gleichen Außenrillen (35,36), die in dem Körper des Sicherheitsventils (22) und in dem Stöpsel (31) erhalten werden, und Arretierelemente (37), wobei die um den Umfang gleichen Innenrillen (32,33) mit den um den Umfang gleichen Außenrillen (35,36) ausgerichtet sind und die Arretierelemente (37) herausziehbar zwischen den Innenrillen (32,33) und den Außenrillen (35,36) einsetzbar sind, um das Sicherheitsventil (22) und den Stöpsel (31) an der dritten (14) und vierten (15) Verbindung zu sichern, wobei die Arretierelemente aus zwei identischen Gabeln (37) bestehen, von welchen jede in ein Paar gegenüberliegender Öffnungen (38;39) einer oder einer anderen der dritten (14) und vierten (15) Verbindung eingesetzt ist, um eine Umkehr der Position des Sicherheitsventils (22) und des Stöpsels (31) zu erlauben.

2. Ventileinheit nach Anspruch 1, wobei die Arme des Kreuzverbinders (11) senkrecht zueinander sind.

3. Ventileinheit nach Anspruch 1 oder 2, wobei der Absperrhahn einen Kugelverschluss (16) umfasst, der nahe der ersten Verbindung (12) des Verbinders (11) angeordnet ist, und das Rückschlagventil (18) stromabwärts von dem Kugelverschluss (16) entlang eines internen Flüssigkeitspfads von der ersten (12) zu der zweiten (13) Verbindung angeordnet ist.

4. Ventileinheit nach einem vorstehenden Anspruch, wobei das Sicherheitsventil (22) intern eine geradlinige Leitung (23) aufweist, die mit der Verbindung (14,15) ausgerichtet ist, mit der das Sicherheitsventil (22) verbunden ist, und von einem Verschluss (24) durch den Schub einer kalibrierten Feder (25) verschlossen wird, und wobei das Sicherheitsventil (22) weiter eine Auslassverbindung (28) aufweist, mit der das Rohr (29) verbunden ist, und die senkrecht zu der geradlinigen Leitung (23) und in Kommunikation mit der geradlinigen Leitung (23) ist, wenn der Verschluss (24) in einer Öffnungsposition der geradlinigen Leitung (23) ist.

5. Ventileinheit nach Anspruch 4, wobei das Rohr (29) lösbar mit der Auslassverbindung (28) des Sicherheitsventils (22) verbunden ist.

6. Ventileinheit nach Anspruch 5, wobei das Rohr (29) mit der Auslassverbindung (28) des Sicherheitsventils (22) durch eine Schnappverbindung (42) verbunden ist.

7. Ventileinheit nach Anspruch 5 oder 6, wobei das Rohr (29) orientierbar ist.

8. Ventileinheit nach Anspruch 4, wobei der Verschluss (24) des Sicherheitsventils (22) mit einem Außenknopf (26) durch eine Stange (27) verbunden ist, sodass manuelle Drehung des Knopfs (26) eine Öffnungsbewegung des Verschlusses (24) der geradlinigen Leitung (23) bewirkt.

9. Ventileinheit nach einem vorstehenden Anspruch, wobei der Kreuzverbinder (11) aus Messing besteht und der Körper des Sicherheitsventils (22), das Abgaberohr (29) und der Stöpsel (31) aus einem Technopolymer bestehen.

10. Ventileinheit nach einem der Ansprüche 1 bis 8, wobei der Kreuzverbinder (11), der Körper des Sicherheitsventils (22), das Abgaberohr (29) und der Stöpsel (31) aus einem Technopolymer bestehen.

## Revendications

1. Unité de clapet de sécurité, en particulier pour protéger un chauffe-eau à accumulation, comprenant un robinet de fermeture (16, 17) pour ajuster un écoulement de fluide entre une entrée et une sortie de l'unité de clapet, un clapet antiretour (18) pour empêcher un reflux de fluide de la sortie à l'entrée, un clapet de sécurité (22) pour décharger un fluide en cas de surpression, et un tuyau de décharge (29) raccordé au clapet de sécurité (22), comprenant un raccord en croix (11) qui incorpore le robinet de fermeture (16, 17) et le clapet antiretour (18), dans laquelle le raccord (11) a un premier raccordement d'entrée (12) et un deuxième raccordement de sortie (13) pour se raccorder respectivement à un conduit d'entrée de fluide et à un conduit de sortie de fluide, et a en outre un troisième raccordement (14) et un quatrième raccordement (15), à l'un desquels (14 ; 15) le clapet de sécurité (22) est raccordé et l'autre desquels (14 ; 15) est fermé par un bouchon (31), des éléments de fixation (32-39) étant fournis pour la fixation amovible du clapet de sécurité (22) et du bouchon (31), **caractérisée en ce que** les éléments de fixation comprennent des rainures internes uniformes périmétriques (32, 33) obtenues dans le troisième raccordement (14) et le quatrième raccordement (15), des rainures externes uniformes périmétriques correspondantes (35, 36) obtenues dans le corps du clapet de sécurité (22) et dans le bouchon (31), et des éléments de verrouillage (37), les rainures internes uniformes périmétriques (32, 33) étant alignées avec les rainures externes uniformes périmétriques (35, 36) et les éléments de verrouillage (37) étant insérables de manière extractible entre les rainures internes (32, 33) et les rainures externes (35, 36) pour fixer le clapet de sécurité (22) et le bouchon (31) au troisième raccordement (14) et au quatrième raccordement (15), dans laquelle les éléments de verrouillage sont constitués de deux fourches identiques (37), chacune d'elles est insérée dans une paire d'ouvertures opposées (38 ; 39) de l'un ou l'autre dudit troisième raccordement (14) et dudit quatrième raccordement (15), pour permettre l'inversion de la position du clapet de sécurité (22) et du bouchon (31).

2. Unité de clapet selon la revendication 1, dans laquelle les bras du raccord en croix (11) sont perpendiculaires l'un à l'autre.

3. Unité de clapet selon la revendication 1 ou 2, dans laquelle le robinet de fermeture comprend un obturateur à bille (16) agencé à proximité du premier raccordement (12) du raccord (11) et le clapet antiretour (18) est agencé en aval de l'obturateur à bille (16) le long d'une voie de fluide interne depuis le premier raccordement (12) jusqu'au deuxième raccordement (13).

4. Unité de clapet selon l'une quelconque des revendications précédentes, dans laquelle le clapet de sécurité (22) a, en interne, un conduit rectiligne (23) aligné avec le raccordement (14, 15) auquel le clapet de sécurité (22) est raccordé et fermé par un obturateur (24) à la poussée d'un ressort calibré (25), et dans lequel le clapet de sécurité (22) a en outre un raccordement de sortie (28), auquel le tuyau (29) est raccordé et qui est perpendiculaire au conduit rectiligne (23) et en communication avec le conduit rectiligne (23) lorsque l'obturateur (24) est dans une position d'ouverture du conduit rectiligne (23).

5. Unité de clapet selon la revendication 4, dans laquelle le tuyau (29) est raccordé, de manière amovible, au raccordement de sortie (28) du clapet de sécurité (22).

6. Unité de clapet selon la revendication 5, dans laquelle le tuyau (29) est raccordé au raccordement de sortie (28) du clapet de sécurité (22) par un raccordement à encliquetage (42).

7. Unité de clapet selon la revendication 5 ou 6, dans laquelle le tuyau (29) est orientable.

8. Unité de clapet selon la revendication 4, dans laquelle l'obturateur (24) du clapet de sécurité (22) est raccordé à une molette extérieure (26) à travers une tige (27), de sorte qu'une rotation manuelle de la molette (26) provoque un mouvement d'ouverture de l'obturateur (24) du conduit rectiligne (23).

9. Unité de clapet selon l'une quelconque des revendications précédentes, dans laquelle le raccord en croix (11) est constitué de laiton, et le corps du clapet de sécurité (22), le tuyau de décharge (29) et le bouchon (31) sont constitués d'un technopolymère.

10. Unité de clapet selon l'une quelconque des revendications 1 à 8, dans laquelle le raccord en croix (11), le corps du clapet de sécurité (22), le tuyau de décharge (29) et le bouchon (31) sont constitués d'un technopolymère.
